# EUROPEAN PATENT SPECIFICATION

(11) **EP 3 124 367 B1**
(45) Date of publication and mention of the grant of the patent: **06.05.2020**
(21) Application number: 15769978.6
(22) Date of filing: 16.03.2015
(51) Int. Cl.: B62K 5/10, B62K 5/05, B62K 5/027, B62J 99/00, B62K 5/08, B62K 23/02, B62K 5/00, B62K 25/04

(54) **SADDLED VEHICLE**
SATTELFAHRZEUG
VÉHICULE À SELLE

(30) Priority: 24.03.2014 JP 2014060804
(43) Date of publication of application: 01.02.2017
(73) Proprietor: Yamaha Hatsudoki Kabushiki Kaisha, Iwata-shi, Shizuoka 438-8501 (JP)
(72) Inventor: SHIBUYA, Yu, Iwata-shi Shizuoka 438-8501 (JP); KAIEDA, Takashi, Iwata-shi Shizuoka 438-8501 (JP)
(74) Representative: Grünecker Patent- und Rechtsanwälte PartG mbB
(86) International application number: PCT/JP2015/057635
(87) International publication number: WO 2015/146660

(56) References cited:
- EP-A1- 1 363 794
- EP-A1- 1 561 612
- EP-A1- 2 199 122
- WO-A1-2011/161856
- JP-A- 2005 313 876
- JP-A- 2009 286 266
- JP-A- 2011 195 100
- JP-A- 2012 025 370

## Description

### BACKGROUND

### TECHNICAL FIELD

The present invention relates to saddle riding type vehicles and more particularly to a saddle riding type vehicle including a pair of front wheels.

### DESCRIPTION OF THE BACKGROUND ART

An example of saddle riding type vehicles is a three-wheeled vehicle including a pair of front wheels and a link mechanism that connects the pair of front wheels to a vehicle body frame. The three-wheeled vehicle can turn while leaning by the operation of the link mechanism.

EP 1 363 794 B1 discloses a control unit which comprises among other things a microprocessor, there is further connected, via a corresponding number of conductor leads, a number of sensors adapted to detect an equal number of signal referred to state of configuration parameters of the vehicle. Examples of parameters that are suitable to an implementation of the present invention are: speed, acceleration, pressure in the braking-circuit, opening state of the butterfly valve of the carburettor (or the fuel injection valve). Moreover, D1 discloses that a part of the signals detected by the sensors 51 are displayed on the dashboard of the vehicle. JP 2005-313876 A discloses an anti-roll device for a three-wheeled vehicle. The anti-roll device includes a brake disk provided integrally with one element of the link mechanism and a caliper attached to a vehicle body frame. In the anti-roll device, the caliper is used to fix the brake disk to the vehicle body frame. In this way, the operation of the link mechanism can be restricted. This can prevent the roll motion of the vehicle.

### SUMMARY

The operability of the vehicle greatly differs depending on whether the operation of the link mechanism is restricted or not. Therefore, the rider often drives the vehicle while being aware of whether the operation of the link mechanism is restricted. An actual state of the vehicle and its state recognized by the rider may be different in some cases.

An object of the present invention is to provide a saddle riding type vehicle that is less likely to cause such difference between an actual state of the link mechanism and its state recognized by the rider.

A saddle riding type vehicle according to a first aspect of the invention includes a vehicle body frame, a pair of front wheels, a link mechanism, a locking mechanism, a controller, and a notifying unit. The link mechanism connects the pair of front wheels to the vehicle body frame. The locking mechanism locks the link mechanism by restricting operation of the link mechanism and unlocks the link mechanism by allowing the link mechanism to operate. The controller controls locking and unlocking of the link mechanism by the locking mechanism. The notifying unit notifies that the vehicle travels while the locking mechanism locks the link mechanism, wherein, the notifying unit notifies a rider that the vehicle travels at least at a prescribed vehicle speed while the locking mechanism locks the link mechanism if a notifying condition is fulfilled, the notifying condition being that vehicle speed is at least the prescribed vehicle speed while the link mechanism is locked, wherein the vehicle speed is lower than a vehicle speed at the time of locking the link mechanism but not zero.

While the vehicle travels, the rider must watch over surrounding states. Therefore, the rider sometimes may not correctly understand a locked state of the link mechanism. According to the aspect, if the vehicle travels while the locking mechanism locks the link mechanism, the notifying unit notifies the state.

Therefore, according to the aspect, there is hardly difference between an actual state of the link mechanism and its state recognized by the rider.

According to another first aspect of the invention, in the saddle riding type vehicle according to the first aspect, the notifying unit notifies that the vehicle travels at a prescribed speed or more while the locking mechanism locks the link mechanism. In this way, the locked state of the link mechanism can be notified appropriately.

According to a second aspect of the invention, in the saddle riding type vehicle according to the first or another first aspect, the notifying unit notifies that the vehicle has traveled for a prescribed period while the locking mechanism has locked the link mechanism. In this way, the locked state of the link mechanism can be notified appropriately.

According to a third aspect of the invention, in the saddle riding type vehicle according to the first aspect, the notifying unit notifies that the link mechanism is locked by the locking mechanism if the locking mechanism locks the link mechanism and then the vehicle travels for a prescribed period at a vehicle speed lower than a vehicle speed at the time of locking of the link mechanism. In this way, the locked state of the link mechanism can be notified appropriately.

According to a fourth aspect of the invention, the saddle riding type vehicle according to the first aspect further includes a notifying condition determiner and a notifying controller. The notifying condition determiner determines whether a notifying condition for notifying a locked state of the link mechanism based on vehicle speed and traveling time while the locking mechanism locks the link mechanism. The notifying controller controls the notifying unit to notify the locked state of the link mechanism if the notifying condition is fulfilled. In this way, the locked state of the link mechanism can be notified appropriately.

According to a fifth aspect of the invention, the saddle riding type vehicle according to any one of the first to fourth aspects further includes a damper. The damper damps vibrations in opposite phases generated at the pair of front wheels. The locking mechanism locks the link mechanism by restricting operation of the damper and unlocks the link mechanism by allowing the damper to operate.

According to the aspect, an additional locking mechanism is not necessary. Therefore, a compact saddle riding type vehicle can be implemented.

### BRIEF DESCRIPTION OF THE DRAWINGS

Fig. 1 is a left side view of a general structure of a saddle riding type vehicle according to an embodiment of the present invention.
Fig. 2 is a front view of a general structure of a link mechanism.
Fig. 3 is a diagram of a hydraulic circuit for a damper.
Fig. 4 is a block diagram for illustrating signals input/output to/from a control device.
Fig. 5 is a flowchart for illustrating locking control by a locking mechanism controller.
Fig. 6 is a flowchart for illustrating notifying control by a notifying controller.

### DESCRIPTION OF THE EMBODIMENTS

Now, a saddle riding type vehicle according to an embodiment of the present invention will be described in conjunction with the accompanying drawings in which the same or corresponding portions are designated by the same reference characters and their description will not be repeated. Note that the saddle riding type vehicle includes a scooter type vehicle.

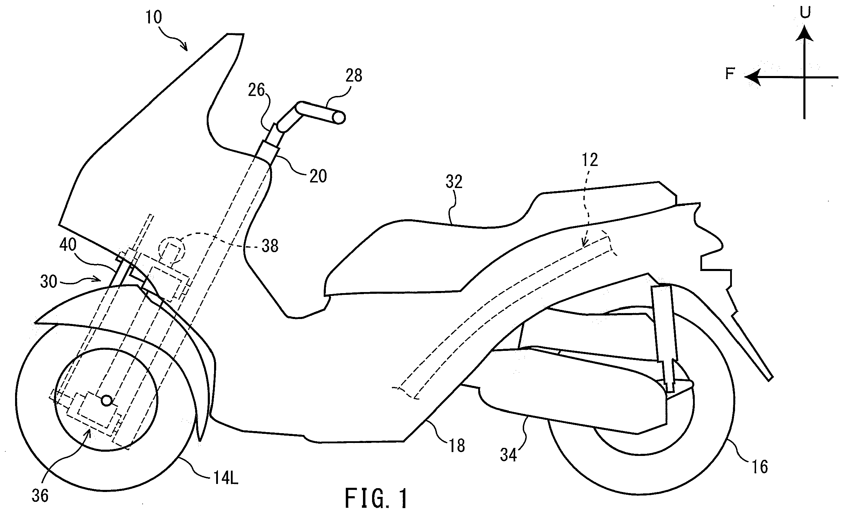

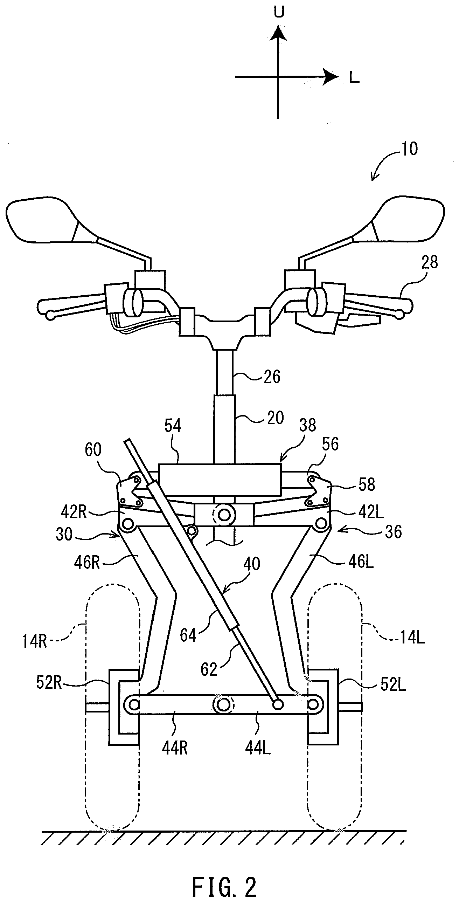

Fig. 1 is a left side view of a general structure of a saddle riding type vehicle 10 according to the embodiment of the invention. Fig. 2 is a front view of a general structure of a link mechanism provided in the saddle riding type vehicle 10. In the following description, the front, back, left, and right refer to these positions as seen by the rider seated on a seat 32 of the saddle riding type vehicle 10. In Fig. 1, the arrow F indicates a forward direction of the saddle riding type vehicle 10 and the arrow U indicates an upward direction of the saddle riding type vehicle 10. In Fig. 2, the arrow L indicates a leftward direction of the saddle riding type vehicle 10 and the arrow U indicates the upward direction of the saddle riding type vehicle 10.

### Overall Structure of Saddle Riding type Vehicle

As shown in Fig. 1, the saddle riding type vehicle 10 includes a vehicle body frame 12, a pair of front wheels 14L and 14R, and a rear wheel 16.

As shown in Fig. 1, the vehicle body frame 12 is covered with a vehicle cover 18. As shown in Fig. 1, the vehicle body frame 12 includes a head pipe 20.

As shown in Fig. 1, the head pipe 20 is provided at a front part of the vehicle body frame 12. As shown in Figs. 1 and 2, the head pipe 20 has a steering shaft 26 inserted therethrough. As shown in Figs. 1 and 2, the steering shaft 26 has a handle 28 at its upper end.

As shown in Fig. 1, a front wheel support mechanism 30 is provided in front of the head pipe 20. As shown in Fig. 2, the front wheel support mechanism 30 supports the pair of front wheels 14L and 14R. The front wheel support mechanism 30 will be described in detail in the following.

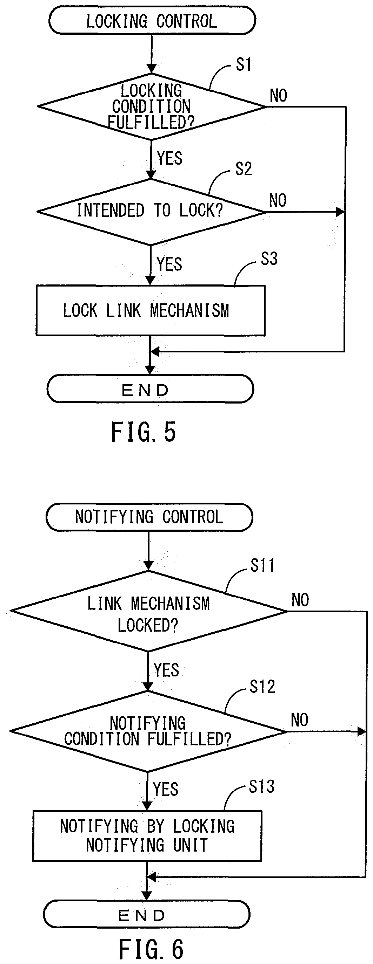

As shown in Fig. 1, the rear wheel 16 is provided below the seat 32. The seat 32 is provided above the vehicle body frame 12. The driving force of an engine 94 (see Fig. 5) is transmitted to rotate the rear wheel 16.

### Front Wheel Support Mechanism

Referring to Fig. 2, the front wheel support mechanism 30 will be described. The front wheel support mechanism 30 includes a link mechanism 36, a suspension 38, and a damper 40.

### Link Mechanism

The link mechanism 36 connects the pair of front wheels 14L and 14R to the vehicle body frame 12 (for example to a front frame provided in front of the head pipe 20). The link mechanism 36 includes an upper left arm 42L, an upper right arm 42R, a lower left arm 44L, a lower right arm 44R, a left knuckle arm 46L, and a right knuckle arm 46R.

One of the upper left arm 42L and the upper right arm 42R can swing relative to the other around an axial line through a swing center that extends in the front-back direction of the vehicle. The lower left arm 44L is provided under the upper left arm 42L. The lower right arm 44R is provided under the upper right arm 42R. One of the lower left arm 44L and the lower right arm 44R can swing relative to the other around an axial line through a swing center that extends in the front-back direction of the vehicle.

The left knuckle arm 46L extends in the vertical direction of the vehicle to connect a left end of the upper left arm 42L and a left end of the lower left arm 44L. The left knuckle arm 46L is provided so that it can swing relative to the upper left arm 42L and the lower left arm 44L around an axial line through a swing center that extends in the front-back direction of the vehicle. Therefore, the left knuckle arm 46L can move in the vertical direction.

The right knuckle arm 46R extends in the vertical direction of the vehicle to connect a right end of the upper right arm 42R and a right end of the lower right arm 44R. The right knuckle arm 46R is provided so that it can swing relative to the upper right arm 42R and the lower right arm 44R around an axial line through a swing center that extends in the front-back direction of the vehicle. Therefore, the right knuckle arm 46R can move in the vertical direction.

At a lower end of the left knuckle arm 46L, a front wheel support member 52L is provided swingably around an axial line through a swing center that extends in the vertical direction of the vehicle. The front wheel support member 52L supports the front wheel 14L in a rotatable manner.

At a lower end of the right knuckle arm 46R, a front wheel support member 52R is provided swingably around an axial line through a swing center that extends in the vertical direction of the vehicle. The front wheel support member 52R supports the front wheel 14R in a rotatable manner.

The front wheel support members 52L and 52R rotate in a plan view as the handle 28 is operated. In this way, the saddle riding type vehicle 10 can turn to the left and right.

### Suspension

As shown in Fig. 2, the suspension 38 is provided at the link mechanism 36. The suspension 38 includes a cylinder 54 and a piston 56.

The cylinder 54 is attached to a right end of the upper right arm 42R through a bracket 60. The cylinder 54 is provided swingably to the upper right arm 42R. The cylinder 54 stores operating oil.

The piston 56 is attached to a left end of the upper left arm 42L through a bracket 58. Here, the bracket 58 is fixed to the upper left arm 42L. The piston 56 is provided swingably relative to the bracket 58. Therefore, the piston 56 is provided swingably relative to the upper left arm 42L.

The piston 56 is provided movably in an axial direction of the cylinder 54. The piston 56 has a main body part (not shown) provided inside the cylinder 54. Upon receiving a vibration input that may change the relative position between the upper left arm 42L and the upper right arm 42R, the piston 56 advances/withdraws within the cylinder 54 to move in the axial direction of the cylinder 54. At the time, the movement of the main body part of the piston 56 in the cylinder 54 produces damping force. As a result, displacement vibrations caused at the link mechanism 36 are damped. For example, vibrations in the same phase caused at the upper left arm 42L and the upper right arm 42R, in other words, vibrations in the same phase caused at the pair of front wheels 14L and 14R are damped by the suspension 38.

### Damper

As shown in Fig. 2, the damper 40 is provided at the link mechanism 36. The damper 40 includes a piston 62 and a cylinder 64. The piston 62 is attached to the lower left arm 44L in a swingable manner. The cylinder 64 is attached to the upper right arm 42R in a swingable manner.

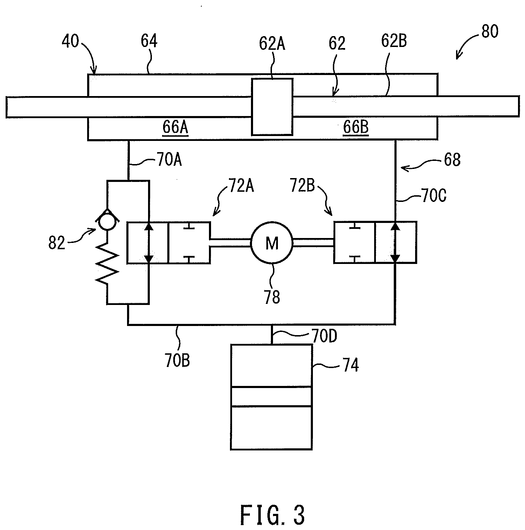

Referring to Fig. 3, a hydraulic circuit that controls the operation of the damper 40 will be described. Fig. 3 is a diagram of the hydraulic circuit for the damper 40.

The piston 62 includes a piston main body 62A and a piston rod 62B. The piston main body 62A is provided in a center part in an axial direction of the piston rod 62B. The piston main body 62A is provided movably in the cylinder 64. The piston rod 62B is provided through the cylinder 64 in the axial direction. More specifically, the damper 40 is a so-called through-rod type damper.

The cylinder 64 stores operating oil. The inside of the cylinder 64 is partitioned into two spaces (a first space 66A and a second space 66B) by the piston main body 62A. The first and second spaces 66A and 66B are connected to each other by a damping circuit 68. The operating oil can therefore move between the first and second spaces 66A and 66B through the damping circuit 68.

The damping circuit 68 includes four flow paths 70A, 70B, 70C, and 70D, two flow regulators 72A and 72B, and one temperature compensating chamber 74. The flow regulator 72A is connected to the first space 66A through the flow path 70A. The flow regulator 72A is connected to the flow regulator 72B through the flow path 70B. The flow regulator 72B is connected to the second space 66B through the flow path 70C. The temperature compensating chamber 74 is connected to the flow path 70B through the flow path 70D.

The flow regulators 72A and 72B each include a selector valve 76. The selector valves 76 are actuated by an actuator 78. The actuator 78 is for example a motor.

The selector valves 76 each include a valve element and a spring. The valve elements are positioned to block the flow paths in the selector valves 76 by the energizing force of the springs. This prevents the operating oil from flowing in the damping circuit 66. In other words, the operation of the damper 40 is restricted. The restriction of the operation of the damper 40 restricts the operation of the link mechanism 36. More specifically, the link mechanism 36 attains a locked state.

The actuator 78 moves the valve element against the energizing force of the spring. At the time, the valve elements are in such a position that they do not block the flow paths in the flow regulators 72A and 72B. Therefore, the operating oil is allowed to flow in the damping circuit 66. In other words, the damper 40 is allowed to operate. When the operation of the damper 40 is thus allowed, vibrations can be damped. When for example vibrations in opposite phases are caused at the lower left arm 44L and the upper right arm 42R, or when vibrations in opposite phases are caused at the pair of front wheels 14L and 14R, the vibrations can be damped by the damper 40. When the operation of the damper 40 is allowed, the operation of the link mechanism 36 is allowed. In other words, the link mechanism attains an unlocked state.

As can be clearly understood from the above description, according to the embodiment, the damper 40, the damping circuit 66, and the actuator 78 are provided to implement the locking mechanism 80.

Note that in the example shown in Fig. 3, the flow regulator 72A is provided with a relief valve 82. The relief valve 82 is provided in parallel with the selector valve 76. The relief valve 82 prevents the internal pressure of the cylinder 64 from increasing when the operation of the damper 40 is restricted.

### Control Device

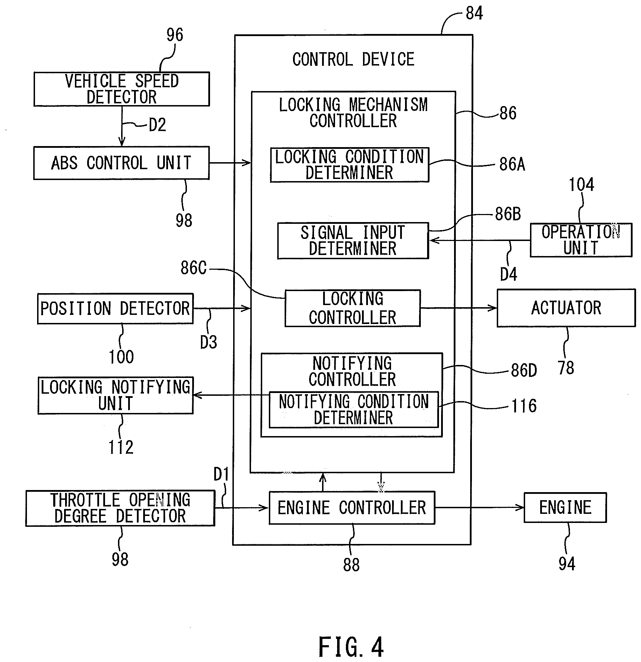

Referring to Fig. 4, a control device 84 provided in the saddle riding type vehicle 10 will be described. Fig. 4 is a block diagram for illustrating signals input/output to/from the control device 84.

The control device 84 includes a locking mechanism controller 86 as a controller and an engine controller 88.

The locking mechanism controller 86 controls locking and unlocking of the link mechanism 36 by the locking mechanism 80. The locking mechanism controller 86 includes a locking condition determiner 86A, a signal input determiner 86B, and a locking controller 86C.

The locking condition determiner 86A determines whether a prescribed locking condition is fulfilled based on a throttle opening degree signal D1, a vehicle speed signal D2, and a position signal D3. The locking condition will be described later in the following.

The throttle opening degree signal D1 is output by a throttle opening degree detector 90 and represents a throttle opening degree. The throttle opening degree signal D1 is input to the locking mechanism controller 86 through the engine controller 88.

The vehicle speed signal D2 is output by a vehicle speed detector 96 and represents a vehicle speed. The vehicle speed detector 96 is for example a wheel speed sensor. According to the embodiment, the saddle riding type vehicle 10 includes an ABS (anti-lock braking system). Therefore, the vehicle speed signal D2 is input to the locking mechanism controller 86 through an ABS control unit 98 that controls the operation of the ABS.

The position signal D3 is output by a position detector 100 and represents the position of the valve elements provided in the selector valves 76. The position detector 100 determines whether the link mechanism 36 is locked. In short, the position detector 100 outputs a locked position signal as the position signal D3 when the valve elements are positioned to block the flow paths in the selector valves 76. The position detector 100 outputs an unlocked position signal as the position signal D3 when the valve elements are not in positions to block the flow paths in the selector valves 76. The position signal D3 is input to the locking mechanism controller 86. The position detector 100 detects the positions of the valve elements included in the selector valves 76 for example by directly detecting the positions of these valve elements or by detecting the position of the actuator 78 as well as voltage for driving the actuator 78.

The signal input determiner 86B determines whether an operation signal D4 is input while the locking condition is fulfilled. A result of determination by the locking condition determiner 86A and an operation signal D4 input to the locking mechanism controller 86 are used for the determination.

The operation signal D4 is output by an operation unit 104. The operation unit 104 continues to output the operation signal D4 to the locking mechanism controller 86 while the rider carries out operation. The operation signal D4 may be output continuously or intermittently. The operation unit 104 is positioned so that the rider can operate the unit. The operation unit 104 is implemented for example by an operation switch provided at the handle 28.

The locking controller 86C controls the locking mechanism 80 to lock the link mechanism 36 if the operation signal D4 is input while the locking condition is fulfilled. More specifically, the locking controller 86C drives the actuator 78 to move the valve elements included in the selector valves 76. In this way, the valve elements block the flow paths in the selector valves 76. As a result, the link mechanism 36 attains a locked state. Note that a result of determination from the signal input determiner 86B is used to determine whether the operation signal D4 is input while the locking condition is fulfilled.

The locking controller 86C unlocks the link mechanism 36 if a prescribed unlocking condition is fulfilled. The unlocking condition may be for example the rider's operation of an unlocking switch or a vehicle speed higher than a prescribed vehicle speed. The unlocking switch may be implemented by the operation unit 104.

The saddle riding type vehicle 10 further includes a locking notifying unit 112 as a notifying unit. The locking notifying unit 112 notifies the rider of a locked state of the link mechanism 36. The notification by the locking notifying unit 112 may be anything that is visibly or audibly recognizable by the rider. The notification that is visibly recognizable by the rider may be made using an indicator. The indicator is for example provided at a meter positioned near the handle 28. The notification that is audibly recognizable by the rider may be made using a speaker. The speaker is for example provided at the meter positioned near the handle 28.

The locking mechanism controller 86 further includes a notifying controller 86D that controls the operation of the locking notifying unit 112. The notifying controller 86D controls the locking notifying unit 112 to notify a locked state of the link mechanism 36 if a notification condition for notifying the locked state of the link mechanism 36 is fulfilled. The notifying controller 86D includes a notifying condition determiner 116. The notifying condition determiner 116 determines whether a notifying condition is fulfilled based on at least one of the vehicle speed and traveling time while the link mechanism 36 is locked by the locking mechanism 80.

### Locking Control by Locking Mechanism Controller

Now, control carried out by the locking mechanism controller 86 to lock the link mechanism 36 (locking control by the locking mechanism controller 86) will be described. Note that the locking control by the locking mechanism controller 86 is not limited to the following example.

The locking mechanism controller 86 controls the locking mechanism 80 to lock the link mechanism 36 if the operation signal D4 is input upon fulfillment of a locking condition under which the link mechanism 36 can be locked. The locking condition is fulfilled if all of the following conditions 1 to 3 are satisfied.
Condition 1: The link mechanism 36 is in an unlocked state.
Condition 2: The present throttle opening degree is zero.
Condition 3: The present vehicle speed is lower than a prescribed vehicle speed.

Now, referring to Fig. 5, the locking control by the locking mechanism controller 86 will be described. Fig. 5 is a flowchart for illustrating the locking control by the locking mechanism controller 86.

First, the locking mechanism controller 86 determines in step S1 whether the locking condition is established. More specifically, the locking condition determiner 86A determines whether all of the above-described conditions 1 to 3 are satisfied.

The locking condition determiner 86A determines whether the link mechanism 36 is in an unlocked state by referring to an input position signal D3. If an unlocked position signal D3 is input, the condition 1 is satisfied.

The locking condition determiner 86A determines whether the present throttle opening degree is zero by referring to an input throttle opening degree signal D1. If the throttle opening degree is zero, in other words, if the throttle valve is closed, the condition 2 is satisfied.

The locking condition determiner 86A determines whether the present vehicle speed is lower than a prescribed vehicle speed (10 km/h for example) by referring to an input vehicle speed signal D2. If the present vehicle speed is lower than the prescribed vehicle speed, the condition 3 is satisfied.

Unless at least one of the conditions 1 to 3 is satisfied, the locking mechanism controller 86 ends the locking control. On the other hand, if all of the conditions 1 to 3 are satisfied, the locking mechanism controller 86 determines in step S2 whether the rider intends to lock the link mechanism 36. More specifically, the signal input determiner 86B determines whether an input condition is fulfilled. The input condition is fulfilled if the following condition 4 is satisfied.
Condition 4: The operation signal D4 is input.

The signal input determiner 86B determines whether the operation signal D4 is input. If the operation signal D4 is input, the condition 4 is satisfied.

The operation signal D4 may be input before or after the locking condition is fulfilled.

If the condition 4 is not satisfied, the locking mechanism controller 86 ends the locking control. On the other hand, if the condition 4 is satisfied, the locking mechanism controller 86 locks the link mechanism 36 in step S3. More specifically, the locking controller 86C drives the actuator 78 to lock the link mechanism 36. The locking mechanism controller 86 subsequently ends the locking control.

### Notifying Control by Notifying Controller

Now, notifying control by the notifying controller 86D will be described. The notifying controller 86D controls the locking notifying unit 112 to notify a locked state of the link mechanism 36 if a notifying condition is fulfilled.

The notifying condition is established when the vehicle speed is at least the prescribed vehicle speed while the link mechanism 36 is locked, wherein the prescribed vehicle speed is lower than a vehicle speed at the time of locking the link mechanism 46 but not zero.

Now, referring to Fig. 6, the notifying control by the notifying controller 86D will be described. Fig. 6 is a flowchart for illustrating the notifying control by the notifying controller 86D.

First in step S11, the notifying controller 86D determines whether the link mechanism 36 is in a locked state. More specifically, the notifying controller 86D refers to an input position signal D3 and determines whether the link mechanism 36 is locked. If a locked position signal D3 is input, the link mechanism 36 is locked.

If the link mechanism 36 is not locked (NO in step S11), the notifying controller 86D ends the notifying control. On the other hand, if the link mechanism 36 is locked (YES in step S11), the notifying controller 86D determines in step S12 whether the notifying condition is fulfilled.

If the notifying condition is not satisfied (NO in step S12), the notifying controller 86D ends the notifying control. On the other hand, if the notifying condition is fulfilled (YES in step S12), the notifying controller 86D carries out notification by the locking notifying unit 112 in step S13. More specifically, the notifying controller controls the operation of the locking notifying unit 112 to notify the rider of the locked state of the link mechanism 36. The notifying controller 86D subsequently ends the notifying control.

Note that the notification by the locking notifying unit 112 may end if for example the link mechanism 36 is unlocked or the notifying condition is no longer fulfilled.

If the saddle riding type vehicle 10 has traveled at a vehicle speed lower than a vehicle speed at the time of locking of the link mechanism 36, a locked state of the link mechanism 36 is notified. Therefore, an actual state of the link mechanism 36 and a state of the link mechanism 36 understood by the rider are hardly different.

### Application 1 of Notifying Condition

The notifying condition is established when the vehicle speed is at least a first vehicle speed while the link mechanism 36 is locked. Here, the first vehicle speed is lower than the vehicle speed at the time of locking of the link mechanism 36 but not zero. The first vehicle speed is for example 6 km/h.

Under the notifying condition, immediately after the link mechanism 36 is locked, the locked state of the link mechanism 36 can be notified. It can be easier to let the rider aware of the locked state of the link mechanism 36.

If the above-described notifying condition is employed, the notification by the locking notifying unit 112 may end when the present vehicle speed becomes lower than the first vehicle speed. If the notification by the locking notifying unit 112 is made by sound as well as indication, the notification by sound may end when for example the present vehicle speed becomes lower than the first vehicle speed.

In this application, the notifying condition is established if the vehicle speed while the link mechanism 36 is locked is higher than the first vehicle speed.

Application 2 of Notifying Condition does not belong to the invention, but is useful to understand the present invention.

It does not belong to the present invention, but is useful to understand the present invention, the notifying condition may be established after a prescribed time (three seconds for example) after the link mechanism 36 is locked. When certain time passes after the link mechanism 36 is locked, the rider may not recognize the state of the link mechanism 36 correctly. The rider can be aware of the state of the link mechanism 36 in such a case.

### Application 3 of Notifying Condition

The notifying condition may be established when the vehicle travels for a prescribed time period at a prescribed vehicle speed or higher while the link mechanism 36 is locked. The vehicle speed does not have to be constant for the prescribed time period. If the notifying condition is employed, the notification by the locking notifying unit 112 may end based on the same requirement as the case of employing the notifying condition according to Application 1.

The embodiment of the present invention has been described but the same is only exemplary illustration to show how the present invention is carried out. Therefore, the invention is not limited by the description of the embodiment and modifications may be made to the embodiment without departing the scope of the invention.

## Claims

1. A saddle riding type vehicle (10), where the vehicle is caused to lean when being turned, the vehicle comprising:
a vehicle body frame (12);
a pair of front wheels (14L, 14R);
a link mechanism (36) that connects the pair of front wheels (14L, 14R) to the vehicle body frame (12);
a locking mechanism (80) that locks the link mechanism (36) by restricting operation of the link mechanism (36) and unlocks the link mechanism (36) by allowing the link mechanism (36) to operate;
a controller (86) that controls locking and unlocking of the link mechanism (36) by the locking mechanism (80); and
a notifying unit (112) that notifies that the vehicle travels while the locking mechanism (80) locks the link mechanism (36), wherein
the notifying unit (112) notifies a rider that the vehicle travels at least at a prescribed vehicle speed while the locking mechanism (80) locks the link mechanism (36) if a notifying condition is fulfilled, the notifying condition being that vehicle speed is at least the prescribed vehicle speed while the link mechanism (36) is locked, wherein the prescribed vehicle speed is lower than a vehicle speed at the time of locking the link mechanism (36) but not zero.

2. The saddle riding type vehicle (10) according to claim 1 or 2, wherein the notifying unit (112) notifies that the vehicle has travelled for a prescribed period while the locking mechanism (80) locks the link mechanism (36).

3. The saddle riding type vehicle (10) according to claim 1, wherein the notifying unit (112) notifies that the link mechanism (36) is locked by the locking mechanism (80) if the locking mechanism (80) locks the link mechanism (36) and then the vehicle travels for a prescribed period at a vehicle speed lower than the vehicle speed at the time of locking the link mechanism (36).

4. The saddle riding type vehicle (10) according to claim 1, further comprising a notifying condition determiner (116) that determines whether a notifying condition for notifying a locked state of the link mechanism (36) is fulfilled based on the vehicle speed and the traveling time while the locking mechanism (80) locks the link mechanism (36); and
a notifying controller (86D) that controls the notifying unit (112) to notify the locked state of the link mechanism (36) if the notifying condition is fulfilled.

5. The saddle riding type vehicle (10) according to any one of claims 1 to 5, further comprising:
a damper (40) that damps vibrations in opposite phases generated at the pair of front wheels (14L, 14R), wherein the locking mechanism (80) locks the link mechanism (36) by restricting operation of the damper (40) and unlocks the link mechanism (36) by allowing the damper (40) to operate.

## Patentansprüche

1. Sattelsitz-Fahrzeug (10), bei dem das Fahrzeug beim Abbiegen geneigt wird, wobei das Fahrzeug umfasst:
einen Fahrzeug-Karosserierahmen (12);
ein Paar Vorderräder (14L, 14R);
einen Gelenk-Mechanismus (36), der die paarigen Vorderräder (14L, 14R) mit dem Fahrzeug-Karosserierahmen (12) verbindet;
einen Sperr-Mechanismus (80), der den Gelenk-Mechanismus (36) sperrt, indem er Funktion des Gelenk-Mechanismus (36) einschränkt, und den Gelenk-Mechanismus (36) entsperrt, indem er Funktion des Gelenk-Mechanismus (36) zulässt;
eine Steuerungseinrichtung (86), die Sperren und Entsperren des Gelenk-Mechanismus (36) durch den Sperr-Mechanismus (80) steuert; sowie
eine Benachrichtigungs-Einheit (112), die darüber benachrichtigt, dass das Fahrzeug fährt, während der Sperr-Mechanismus (80) den Gelenk-Mechanismus (36) sperrt, wobei
die Benachrichtigungs-Einheit (112) einen Fahrer darüber benachrichtigt, dass das Fahrzeug wenigstens mit einer vorgeschriebenen Fahrzeuggeschwindigkeit fährt, während der Sperr-Mechanismus (80) den Gelenk-Mechanismus (36) sperrt, falls eine Benachrichtigungs-Bedingung erfüllt ist, wobei die Benachrichtigungs-Bedingung darin besteht, dass die Fahrzeuggeschwindigkeit wenigstens die vorgeschriebene Fahrzeuggeschwindigkeit ist, während der Gelenk-Mechanismus (36) gesperrt ist, und die vorgeschriebene Fahrzeuggeschwindigkeit niedriger als eine Fahrzeuggeschwindigkeit beim Sperren des Gelenk-Mechanismus (36), jedoch nicht Null, ist.

2. Sattelsitz-Fahrzeug (10) nach Anspruch 1 oder 2, wobei die Benachrichtigungs-Einheit (112) darüber benachrichtigt, dass das Fahrzeug über einen vorgeschriebenen Zeitraum gefahren ist, während der Sperr-Mechanismus (80) den Gelenk-Mechanismus (36) sperrt.

3. Sattelsitz-Fahrzeug (10) nach Anspruch 1, wobei die Benachrichtigungs-Einheit (112) darüber benachrichtigt, dass der Gelenk-Mechanismus (36) durch den Sperr-Mechanismus (80) gesperrt wird, wenn der Sperr-Mechanismus (80) den Gelenk-Mechanismus (36) sperrt, und dann das Fahrzeug über einen vorgeschriebenen Zeitraum mit einer Fahrzeuggeschwindigkeit fährt, die niedriger ist als die Fahrzeuggeschwindigkeit beim Sperren des Gelenk-Mechanismus (36).

4. Sattelsitz-Fahrzeug (10) nach Anspruch 1, das des Weiteren eine Einrichtung (116) zum Feststellen einer Benachrichtigungs-Bedingung umfasst, die auf Basis der Fahrzeuggeschwindigkeit und der Fahrzeit feststellt, ob eine Benachrichtigungs-Bedingung zum Benachrichtigen über einen gesperrten Zustand des Gelenk-Mechanismus (36) erfüllt ist, während der Sperr-Mechanismus (80) den Gelenk-Mechanismus (36) sperrt; sowie
eine Benachrichtigungs-Steuerungseinrichtung (86D), die die Benachrichtigungs-Einheit (112) so steuert, dass sie über den gesperrten Zustand des Gelenk-Mechanismus (36) benachrichtigt, wenn die Benachrichtigungs-Bedingung erfüllt ist.

5. Sattelsitz-Fahrzeug (10) nach einem der Ansprüche 1 bis 5, das des Weiteren umfasst: eine Dämpfeinrichtung (40), die Vibrationen in entgegengesetzten Phasen dämpft, die an den paarigen Vorderrädern (14L, 14R) erzeugt werden, wobei der Sperr-Mechanismus (80) den Gelenk-Mechanismus (36) sperrt, indem er Funktion der Dämpfeinrichtung (40) einschränkt, und den Gelenk-Mechanismus (36) entsperrt, indem er Funktion der Dämpfeinrichtung (40) zulässt.

## Revendications

1. Véhicule du type à selle (10) qui est incliné lors d'un virage, le véhicule comprenant :
un châssis de corps de véhicule (12) ;
une paire de roues avant (14L, 14R) ;
un mécanisme de liaison (36) qui connecte la paire de roues avant (14L, 14R) au châssis de corps de véhicule (12) ;
un mécanisme de verrouillage (80) qui verrouille le mécanisme de liaison (36) en restreignant le fonctionnement du mécanisme de liaison (36) et déverrouille le mécanisme de liaison (36) en permettant au mécanisme de liaison (36) de fonctionner ;
un contrôleur (86) qui contrôle le verrouillage et le déverrouillage du mécanisme de liaison (36) par le mécanisme de verrouillage (80) ; et
une unité de notification (112) qui notifie que le véhicule se déplace alors que le mécanisme de verrouillage (80) verrouille le mécanisme de liaison (36), dans lequel
l'unité de notification (112) notifie le conducteur que le véhicule se déplace au moins à une vitesse de véhicule prescrite alors que le mécanisme de verrouillage (80) verrouille le mécanisme de liaison (36) si une condition de notification est remplie, la condition de notification étant que la vitesse du véhicule est au moins la vitesse de véhicule prescrite alors que le mécanisme de liaison (36) est verrouillé, dans lequel la vitesse de véhicule prescrite est inférieure à la vitesse du véhicule au moment du verrouillage du mécanisme de liaison (36) mais n'est pas nulle.

2. Véhicule du type à selle (10) selon la revendication 1 ou 2, dans lequel l'unité de notification (112) notifie que le véhicule s'est déplacé durant une période prescrite alors que le mécanisme de verrouillage (80) verrouille le mécanisme de liaison (36).

3. Véhicule du type à selle (10) selon la revendication 1, dans lequel l'unité de notification (112) notifie que le mécanisme de liaison (36) est verrouillé par le mécanisme de verrouillage (80) si le mécanisme de verrouillage (80) verrouille le mécanisme de liaison (36), et ensuite le véhicule se déplace durant une période prescrite à une vitesse de véhicule inférieure à la vitesse de véhicule au moment du verrouillage du mécanisme de liaison (36).

4. Véhicule du type à selle (10) selon la revendication 1, comprenant en outre
un dispositif de détermination de condition de notification (116) qui détermine si une condition de notification pour la notification d'un état verrouillé du mécanisme de liaison (36) est remplie ou non sur base de la vitesse du véhicule et du temps de déplacement alors que le mécanisme de verrouillage (80) verrouille le mécanisme de liaison (36) ; et
un contrôleur de notification (86D) qui contrôle l'unité de notification (112) pour notifier l'état verrouillé du mécanisme de liaison (36) si la condition de notification est remplie.

5. Véhicule du type à selle (10) selon l'une quelconque des revendications 1 à 5, comprenant en outre :
un amortisseur (40) qui amortit les vibrations dans des phases opposées générées sur la paire de roues avant (14L, 14R), dans lequel le mécanisme de verrouillage (80) verrouille le mécanisme de liaison (36) en restreignant le fonctionnement de l'amortisseur (40) et déverrouille le mécanisme de liaison (36) en permettant à l'amortisseur (40) de fonctionner.
